# EUROPEAN PATENT SPECIFICATION

(11) **EP 0 388 479 B1**
(45) Date of publication and mention of the grant of the patent: **20.12.1995**
(21) Application number: 89104914.0
(22) Date of filing: 18.03.1989
(51) Int. Cl.: H02J 3/18

(54) **Voltage-reactive power control apparatus**
Blindleistungskontrollierapparat
Appareil de réglage de la puissance réactive

(43) Date of publication of application: 26.09.1990
(73) Proprietor: MITSUBISHI DENKI KABUSHIKI KAISHA, Tokyo 100 (JP)
(72) Inventor: Terada, Makoto c/o Mitsubishi Denki, Chiyoda-ku Tokyo 100 (JP); Suzuki, Hiroshi c/o Mitsubishi Denki, Chiyoda-ku Tokyo 100 (JP)
(74) Representative: Eisenführ, Speiser & Partner

(56) References cited:
- EP-A- 0 260 504
- IEEE TRANSACTIONS ON INDUSTRY APPLICATIONS, vol. IA-22, no. 6, November/ December 1986, pages 1091-1104, IEEE, New York, NY, US; L.H. WALKER: "Force- commutated reactive-power compensator"
- REV. GENER. DE L'ELECTR., vol. 88, no. 1, January 1979, pages 58-72; M. BOIDIN et al.: "Performance dynamiques des compensateurs statiques à thyristors et principes de régulation "
- IEEE TRANSACTIOS ON POWER SYSTEMS,VOL.3,N 1,FEB.1988:A.TIRANUCHIT AND AL:A POSTURING STRATEGY AGAINST VOLTAGE INSTABILITIES IN ELECTRIC POWER SYSTEMS;PP.87-93
- PROC. IEE,VOL.115,N 4,APRIL 1968;B.D. WEEDY AND AL:VOLTAGE STABILITY OF RADIAL POWER LINKS;PP.528-536
- IEEE TRANSACTIONS ON POWER SYSTEMS,VOL.3,N 2, MAY 1988; A. TIRANUCHIT AND AL:TOWARDS A COMPUTATIONALLY FEASIBLE ON-LINE VOLTAGE INSTABILITY INDEX;PP.669-675
- IEEE STD 242-1986;PP.66-69,51,64 AND PARAGRAPHS 2.5 TO 2.6
- IEEE STD141-1986;PP.283-288
- ANSI/IEEEC37.04-1964 PP.17-21
- ENERGETIKA I AUTOMATIKA,MARCH 1961;V.A. VENIKOV AND AL:THE STABILITY OF LOADS;PP. 121-125
- IEEE TRANSACTIONS ON POWER DELIVERY, VOL.PWRD-1,N 4,OCT. 1986;Y. CHARA AND AL:MICROPROCESSOR BASED STABILIZINGCONTROL EQUIPMENT FOR SURVIVAL OF ISOLATED MIDICITY POWER SYSTEMS;PP.99-104

## Description

### VOLTAGE-REACTIVE POWER CONTROL APPARATUS

### BACKGROUND OF THE INVENTION

### Field of the Invention

The present invention relates to a voltage-reactive power control apparatus incorporated to reactive power supplying equipment for adequately sustaining load side voltages in the power system.

### Description of the Prior Art

A voltage of the power system always fluctuates, as is well known, in accordance with change of demand and supply. Large voltage fluctuation affects not only normal application or operation life of a variety of electrical appliances connected to the system, consumers but also insulation design of various power apparatus to be installed in the power system, and moreover results in interferes for stable and efficient operations of the system including a power generator from the viewpoint of operation of the power system. Namely, the voltage-reactive power control is essential for all electrical appliances and power apparatuses connected to the power system to ensure normal operations and for realizing stable and efficient operations of the system.

Moreover, due to the increase in demand of power and difficulties in obtaining power plant site insufficiency of location caused by environmental problem, the recent power generation plant is in the situation as the far remoted and localized, realization of large scale power generation base through utilization of a large capacity generator unit and long distance and high voltage transmission and heavier power flow in the power transmission facilities.

Of various problems to be overcome for safe and economical running of a higher density, larger capacity power system which is expanding and being more complicated from year after year, followings are considered as the essential problems, although a voltage problem may not easily be evaluated directly from the economical viewpoint in its effect.
(1) Voltage drop under a heavy load
(2) Abnormal rise of voltage under light load
(3) Voltage drop during system failure
(4) Improvement in performance of voltage-reactive power control during system operation.

The items (1), (2) will be described hereunder in more detail.

In general, a voltage of power system is maintained and adjusted to a preset reference value through the voltage-reactive power control of the generator and phase modifying equipment. However, if the large supply power of VAR supply equipments falls a load increases suddenly or demand and supply of the reactive power is unbalanced, voltage of the primary system may abnormally fall or rise under the situation where the power system is grown-up in scale.

Such a system operating situation is reported in detail in the Technical Report of Japan Electrical Engineering Society (Part II), No. 238, P60.

However, in such voltage fail or unstable phenomenon, when a cause is once set up, a local and minor failure is first generated and it is then developed to the wider and major failure. Therefore, detection at early stage and quick counter-measures are required.

Since the voltage-reactive power control apparatus of the prior art has mainly assigned monitoring and operation for such voltage variation or voltage abnormalities to the load dispatching center which manages operation of the whole system. Moreover the information coming from the load end is delayed, and synchronized informations are not obtained. Therefore these informations are inaccurate to be used.

In the document "IEEE Transactions on Power Systems Vol. 3 No. 1 (February 1988), pages 87 to 93; A. Tiranuchit: A posturing strategy against voltage instabilities in electric power systems", the authors propose the minimum singular value of the Jacobian of the network equations as a voltage security index. First, the basic configuration used by the authors to explain the voltage collapse is a circuit having a voltage source in series with an impedance which circuit represents the Thevenin equivalent of a network connected to a load. Next, the authors show the basic equation representing the volt/VAR relation at the load end according to the above basic configuration, introducing some observations already obtained on voltage/power characteristics. The equation raised by the authors is how to generalize these observations to an N+1-machine, M-load bus problem. Such a continuation method is employed as a tool for providing an insight into the extension of the observations on the above basic configuration to a larger network problem. The continuation method solution is summarized in an optimization algorithm flow chart. Furthermore, a solution on an AEP 57 bus standard test system is introduced. As conclusion, the authors state that an attractive index of high sensitivety of the minimum singular value to power adjustments near voltage instability limits has been obtained and that a disadvantage of using the minimum singular value index is the large amount of CPU time required in performing a singular value decomposition for a large network matrix.

### SUMMARY OF THE INVENTION

The present invention has been proposed to solve such problems and therefore it is an object of the present invention to provide a voltage-reactive power control apparatus which takes a measure for a local failure and then spreading the range for measure in case when wider area measure required.

In order to achieve the above-mentioned object, in accordance with the invention, there is provided a voltage-reactive power control apparatus comprising:
measuring means installed at a principal point of the system for measuring the power flow the system and the load voltage at the principal point;
power flow supervisory means for calculating the rates of change of active and reactive power with respect to the time by using the measured power flow and the load voltage and for supervising said rates of change;
short circuit capacity calculating means for calculating the phase angle of the power source side impedance and the short circuit capacity by using the values obtained by said measuring means and said power flow supervisory means under the condition that the system is considered as a single load being connected at the principal point according to the Thevenin equivalent of a network comprising of a single constant voltage power source through a single power source side impedance;
stability limit calculating means for calculating the maximal possible value of the power flow and the value of the load voltage at the principal point when the power flow reaches said maximal possible value by using the values obtained by said short circuit capacity calculating means and for calculating a voltage stability limit margin of the power flow defined as being the ratio of the present power flow and said maximal possible value of the power flow and a voltage stability limit margin of the load voltage defined as being the ratio of the present load voltage and the value of said load voltage at the principal point when the power flow reaches said maximal possible value; and
VAR supply equipment adjusting means for controlling a VAR supply equipment when said voltage stability limit margin of the power flow and said voltage stability limit margin of the load voltage reach a predetermined value and when consecutively the rates of change of the load voltage with respect to the active and reactive power reach a predetermined value, the VAR supply equipment being controlled with a time delay corresponding to said rates of change of the load voltage with respect to the active and reactive power.

Accordingly, the voltage reactive-power adjusting equipment of the present invention is installed at the principal point of the load area in the power system.

The equipment first detects the power flow into load and the voltage at the load side with the control and monitoring device within the equipment.

Next the rate of change of the power-flow and that of the voltage are calculated from the measured value obtained as above. When each of the rate of change exceed their own limit value, the margin value calculated by the following system data to determine the control signal to VAR supply equipment with proper time delay, where the system data includes short circuit capacity of the power system, the power flow, the load-side voltage, and the voltage stability limit of the system calculated as assumed the load being constant-power load.

Especially when the margin for the above rate-of-change of voltage is small, the control signal to the VAR supply equipment has time delay which depends on the ratio of voltage change to VAR supply change.

The voltage-reactive power control apparatus of the present invention also forecasts voltage collapse by detecting voltage drop which is often generated in local load area of the system and quickly operates the near-by apparatus and besides sends informations to the upper level dispatching stations controlling the wider part of system. Moreover, if a countermeasure for wider range of system is required, the apparatus of the present invention takes the preventive control action which may be done properly for the wider area of system.

### BRIEF DESCRIPTION OF THE DRAWINGS

Fig. 1 is an equivalent circuit (especially called Thevenin equivalent) of the system for explaining the principle which is the base of the present invention.

Fig. 2 is a block diagram of the configuration of a voltage-reactive power control apparatus depending on a preferred embodiment of the present invention.

Fig. 3 is a block diagram of the detailed configuration of a control and supervisory devices shown in Fig. 2.

Fig. 4 is a flowchart of the operations of a voltage-reactive power control apparatus depending on the preferred embodiment of the present invention.

### DETAILED DESCRIPTION OF THE PREFERRED EMBODIMENTS

A preferred embodiment of the present invention will be explained hereunder with reference to the accompanying drawings.

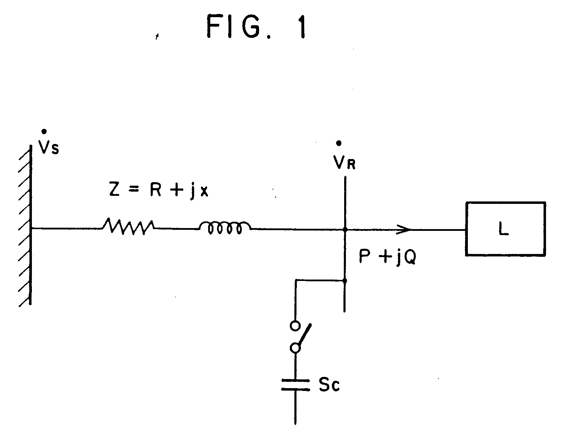

First, the principle will be explained. Fig. 1 is an equivalent circuit of the system for explaining the principle of the present invention. This circuit is equivalent to the circuit commonly called Thevenin equivalent as introduced in the document "IEEE Transactions on Power Systems Vol. 3 No. 1 (February 1988), pages 87 to 93; A. Tiranuchit: A posturing strategy against voltage instabilities in electric power systems" being set as the basis of the following description. In this figure, a load (power at the load end is designated as P + jQ) is connected to the system in the power source side through an impedance Z in the side of power source. V_{R} designates load voltage and V_{S}, voltage at the power source side.

With the short-circuit capacity of the system designated as S, following standardization can be carried out.

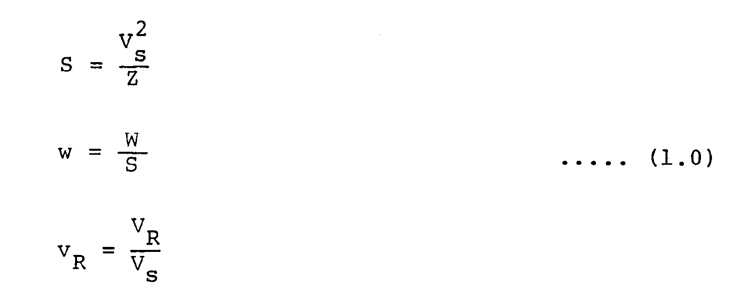

Where,
- W:: load power
- w:: standardized load power (P. U)
- v_{R}:: standardized load voltage (P. U)

Using w, v_{R}, following relationship can be set.${\text{v}}_{\text{R}}^{\text{4}} {\text{+ {2(wcos(φ - ϑ) - 1)} v}}_{\text{R}}^{\text{2}} \text{+ w² = 0}$

Here, φ is power factor angle of power source side impedance Z,
tan φ = X/R

Moreover, ϑ is power factor angle of load side impedance Z_{L},
tan ϑ = X_{L}/R_{L}

For the load power w,
p = w cosϑ
q = w sinϑ

Where, since p = active power and q = reactive power, from the above formula,$\frac{{\text{∂v}}_{\text{R}}}{\text{∂p}} \text{= -} \frac{{\text{v}}_{\text{R}} {\text{(p + v}}_{\text{R}}^{\text{2}} \text{cos φ)}}{{\text{v}}_{\text{R}}^{\text{4}} \text{- w²}}$$\frac{{\text{∂v}}_{\text{R}}}{\text{∂q}} \text{= -} \frac{{\text{v}}_{\text{R}} {\text{(q + v}}_{\text{R}}^{\text{2}} \text{sin φ)}}{{\text{v}}_{\text{R}}^{\text{4}} \text{- w²}}$
moreover,$\text{K =} \frac{\frac{{\text{∂v}}_{\text{R}}}{\text{∂q}}}{\frac{{\text{∂v}}_{\text{R}}}{\text{∂p}}} \text{=} \frac{{\text{q + v}}_{\text{R}}^{\text{2}} \text{sin φ}}{{\text{p + v}}_{\text{R}}^{\text{2}} \text{cos φ}}$
where as,$\text{p = w cos ϑ =} \frac{\text{W}}{\text{S}} \text{cos ϑ} \text{=} \frac{\text{W}}{\frac{{\text{V}}_{\text{s}}^{\text{2}}}{\text{Z}}} \text{cos ϑ} \text{=} \frac{\text{ZW}}{{\text{V}}_{\text{R}}^{\text{2}}} {\text{cos ϑ · v}}_{\text{R}}^{\text{2}}$$\text{q = w sin ϑ =} \frac{\text{W}}{\text{S}} \text{sin ϑ} \text{=} \frac{\text{ZW}}{{\text{V}}_{\text{R}}^{\text{2}}} {\text{sin ϑ · v}}_{\text{R}}^{\text{2}}$

Then, as can be seen easily$\text{∴ K =} \frac{\frac{\text{W}}{{\text{V}}_{\text{R}}^{\text{2}}} \text{Z sin ϑ + sin φ}}{\frac{\text{W}}{{\text{V}}_{\text{R}}^{\text{2}}} \text{Z cos ϑ + cos φ}} \text{=} \frac{\frac{\text{Z}}{{\text{Z}}_{\text{L}}} \text{sin ϑ + sin φ}}{\frac{\text{Z}}{{\text{Z}}_{\text{L}}} \text{cos ϑ + cos φ}} \text{≒} \frac{\text{sin φ}}{\text{cos φ}} \text{= tan φ =} \frac{\text{X}}{\text{R}} {\text{(Z < Z}}_{\text{L}} \text{)}$

Namely,$\frac{\frac{{\text{∂v}}_{\text{R}}}{\text{∂q}}}{\frac{{\text{∂v}}_{\text{R}}}{\text{∂p}}} \text{=} \frac{\frac{{\text{∂V}}_{\text{R}}}{\text{∂Q}}}{\frac{{\text{∂V}}_{\text{R}}}{\text{∂P}}} \text{= K =} \frac{\text{X}}{\text{R}}$
Where, S is assumed to be constant during this calculation period.

Using these relationships, a value of X/R is first obtained.

Next, from the formula (1.1),${\text{w = - v}}_{\text{R}}^{\text{2}} \text{cos (φ - ϑ) +} \sqrt{{\text{v}}_{\text{R}}^{\text{2}} {\text{- v}}_{\text{R}}^{\text{4}} \text{sin² (φ - ϑ)}}$

From this relationship,$\text{S =} \frac{\text{W}}{\text{w}} \text{=} \frac{\text{W}}{\text{-} \frac{{\text{V}}_{\text{R}}^{\text{2}}}{{\text{V}}_{\text{s}}^{\text{2}}} \text{cos (φ - ϑ) +} \sqrt{\frac{{\text{V}}_{\text{R}}^{\text{2}}}{{\text{V}}_{\text{s}}^{\text{2}}} \text{-} \frac{{\text{V}}_{\text{R}}^{\text{4}}}{{\text{V}}_{\text{s}}^{\text{4}}} \text{sin² (φ - ϑ)}}}$

Namely, when the reference value of V_{S} is predetermined, the short-circuit capacity S of the power system can be calculated from the above formula using the values of φ, ϑ and v_{R} as the known value.

In addition, it is known that the formula (1.1) shows the stable limit point when the load is constant power load, with the relationships as${\text{w}}_{\text{m}} \text{=} \frac{\text{1}}{\text{2 {1 + cos(φ - ϑ)}}}$${\text{v}}_{\text{Rm}} \text{=} \sqrt{{\text{w}}_{\text{m}}}$
Accordingly, the values of wₘ, v_{Rm} can be obtained using the values of φ, ϑ and S.

Where,
wₘ is the maximum value of load power w
v_{Rm} is the maximum value of voltage in the power receiving end when the load power becomes the maximum

From this result, a surplus of the current load flow and voltage for the stable limit can be calculated by the following calculation.

Namely,${\text{m}}_{\text{w}} \text{=} \frac{\text{w}}{{\text{w}}_{\text{m}}} \text{= 2 {1 + cos(φ - ϑ)} ·} \frac{\text{W}}{\text{S}} \text{= 2} \frac{\text{W}}{\text{S}} \text{{1 + cos(φ - ϑ)}}$
where
- m_{w}:: margin of the present load flow for voltage stability limit

Next,${\text{m}}_{\text{v}} \text{=} \frac{{\text{v}}_{\text{R}}}{{\text{v}}_{\text{Rm}}} \text{=} \frac{\frac{{\text{V}}_{\text{R}}}{{\text{V}}_{\text{s}}}}{\frac{\text{1}}{\sqrt{\text{2}}} \text{·} \frac{\text{1}}{\sqrt{\text{1 + cos (φ - ϑ)}}}} \text{=} \sqrt{\text{2 (1 + cos} \overline{\text{φ - ϑ}} \text{)}} \text{·} \frac{{\text{V}}_{\text{R}}}{{\text{V}}_{\text{s}}}$
- mᵥ:: margin of load voltage for voltage stability limit

Finally the present margin of power flow and voltage for the stability limit can be monitored constantly by the calculations of formulae (1.7), (1.8).

Finally, using a value S, values of p and q may be obtained as follow,$\text{p =} \frac{\text{W cos ϑ}}{\text{S}}$$\text{q =} \frac{\text{W sin ϑ}}{\text{S}}$
and thereby, following calculations may be executed.$\frac{{\text{∂v}}_{\text{R}}}{\text{∂p}} \text{=} \frac{{\text{p + v}}_{\text{R}}^{\text{2}} \text{cos φ}}{{\text{v}}_{\text{R}}^{\text{4}} \text{- w²}} {\text{V}}_{\text{R}}$$\frac{{\text{∂v}}_{\text{R}}}{\text{∂q}} \text{=} \frac{{\text{q + v}}_{\text{R}}^{\text{2}} \text{sin φ}}{{\text{v}}_{\text{R}}^{\text{4}} \text{- w²}} {\text{V}}_{\text{R}}$

In summary of the above, power flow for stable voltage limit, margin of active power flow and voltage for the stable limit and sensitivity coefficient of voltage for change of power flow can be calculated and monitored by measuring the effective power P, reactive power Q and load side voltage V_{R} at the load end and detecting changes of these values.

When voltage tends to clip and a countermeasure is required after detection and discrimination of the current condition, VAR supply equipment is to be switched.

If it is supposed that the VAR supply equipments having admittance Y_{c} is switched, following relationship can be obtained.${\text{v}}_{\text{R}}^{\text{2}} {\text{= v}}_{\text{R}}^{\text{4}} {\text{(1 - 2ZY}}_{\text{c}} {\text{sin φ + Z² Y}}_{\text{c}}^{\text{2}} \text{)} {\text{+ 2v}}_{\text{R}}^{\text{2}} {\text{w {cos(φ - ϑ) - ZY}}_{\text{c}} \text{cos ϑ} + w²}$

Namely, the relationship between voltage power flow when the phase VAR supply equipment is turned on is expressed as follow with reference to V_{R} of Fig. 1,${\text{V}}_{\text{s}} {\text{= V}}_{\text{R}} \text{+} \frac{\text{(R + jx) {p + j} \overline{{\text{Q - Y}}_{\text{c}} {\text{V}}_{\text{R}}^{\text{2}} \text{}}}}{{\text{V}}_{\text{R}}} {\text{= V}}_{\text{R}} {\text{(1 - XY}}_{\text{c}} \text{) +} \frac{\text{PR + QX}}{{\text{V}}_{\text{R}}} {\text{+ j (RY}}_{\text{c}} {\text{V}}_{\text{R}} \text{+} \frac{\text{PX - RQ}}{{\text{V}}_{\text{R}}} \text{)}$

This formula can be written as follows through comparison of absolute values in the right and left sides.${\text{V}}_{\text{s}}^{\text{2}} {\text{= V}}_{\text{R}}^{\text{2}} {\text{(1 - 2XY}}_{\text{c}} {\text{+ Z²V}}_{\text{c}}^{\text{2}} {\text{) + {2 (RP+XQ) - Z²Y}}_{\text{c}} \text{Q}+} \frac{\text{Z²W²}}{{\text{V}}_{\text{R}}^{\text{2}}}$

Here, using the relationships,$\frac{{\text{V}}_{\text{R}}}{{\text{V}}_{\text{s}}} {\text{= v}}_{\text{R}} \text{S =} \frac{{\text{V}}_{\text{s}}^{\text{2}}}{\text{Z}}$$\text{W² = P² + Q²}$$\text{Z² = R² + X²}$
above formula can be standardized as follows.${\text{v}}_{\text{R}}^{\text{2}} {\text{= v}}_{\text{R}}^{\text{4}} {\text{(1 - 2ZY}}_{\text{c}} {\text{sin φ + Z²Y}}_{\text{c}}^{\text{2}} \text{)} {\text{+ 2v}}_{\text{R}}^{\text{2}} {\text{w {cos(φ - ϑ) - ZY}}_{\text{c}} \text{cos ϑ} + w²}$

This is similar to the formula (1.11).

It is understood from the following explanation, load power in satisfying the above relationship becomes larger than the value in satisfying the formula (1.11) for the same load voltage V_{R}.

Namely, improvement effect of the voltage stability limit value by the VAR supply equipment can be expressed as follows:
First from the formula (1.11)${\text{v}}_{\text{R}}^{\text{2}} {\text{= v}}_{\text{R}}^{\text{4}} {\text{(1 - 2ZY}}_{\text{c}} {\text{sin φ + Z²Y}}_{\text{c}}^{\text{2}} \text{)} {\text{+ 2v}}_{\text{R}}^{\text{2}} {\text{w {cos(φ - ϑ) - ZY}}_{\text{c}} \text{cos ϑ} + w²}$

When this formula is differentiated for w as indicated below.${\text{2v}}_{\text{R}} \text{·} \frac{{\text{∂v}}_{\text{R}}}{\text{∂w}} {\text{= 4v}}_{\text{R}}^{\text{3}} {\text{(1 - 2ZY}}_{\text{c}} {\text{sin φ + Z²Y}}_{\text{c}}^{\text{2}} \text{)} \frac{{\text{∂v}}_{\text{R}}}{\text{∂w}} {\text{+ 4v}}_{\text{R}} {\text{w {cos(φ - ϑ) - ZY}}_{\text{c}} \text{cos ϑ}} \frac{{\text{∂v}}_{\text{R}}}{\text{∂w}} {\text{+ 2v}}_{\text{R}}^{\text{2}} {\text{{cos(φ - ϑ) - ZY}}_{\text{c}} \text{cos ϑ} + 2w}$$\frac{{\text{∂v}}_{\text{R}}}{\text{∂w}} {\text{= 2v}}_{\text{R}}^{\text{2}} {\text{(1 - 2ZY}}_{\text{c}} {\text{sin φ + Z²Y}}_{\text{c}}^{\text{2}} \text{)} \frac{{\text{∂v}}_{\text{R}}}{\text{∂w}} {\text{+ v}}_{\text{R}} {\text{{cos(φ - ϑ) - ZY}}_{\text{c}} \text{cos ϑ}} {\text{+ 2w {cos(φ - ϑ) - ZY}}_{\text{c}} \text{cos ϑ}} \frac{{\text{∂v}}_{\text{R}}}{\text{∂w}} \text{+} \frac{\text{w}}{{\text{v}}_{\text{R}}}$
At a stability limit, the above value becomes infinite. In this case,${\text{w′}}_{\text{om}} \text{=} \frac{\text{1 + 2} \sqrt{{\text{1 - 2ZY}}_{\text{c}} {\text{sin φ + Z² Y}}_{\text{c}}^{\text{2}}}}{{\text{2 {cos(φ - ϑ) - ZY}}_{\text{c}} \text{cos ϑ}}} \text{or} {\text{v′}}_{\text{om}} {\text{= w′}}_{\text{om}}$

A value of load power w for the same load voltage is expressed as follows.${\text{w² + 2v}}_{\text{R}}^{\text{2}} {\text{cos(φ - ϑ) w + (v}}_{\text{R}}^{\text{4}} {\text{- v}}_{\text{R}}^{\text{2}} \text{) = 0}$

In case a shunt capacitor is inserted,${\text{w² + 2v}}_{\text{R}}^{\text{2}} {\text{{cos(φ - ϑ) - ZY}}_{\text{c}} \text{cos ϑ}w} {\text{+ v}}_{\text{R}}^{\text{4}} {\text{(1 - 2ZY}}_{\text{c}} {\text{sin φ + Z²Y}}_{\text{c}}^{\text{2}} {\text{) - v}}_{\text{R}}^{\text{2}} \text{= 0}$

Here, under the following preambles,$\frac{{\text{cos(φ - ϑ) - ZY}}_{\text{c}} \text{cos ϑ}}{\text{cos(φ - ϑ)}} \text{= a (< 1)}$${\text{1 - 2ZY}}_{\text{c}} {\text{sin φ + Z² Y}}_{\text{c}}^{\text{2}} \text{= b² (< 1)}$
following relationship can be obtained.${\text{w² + 2v}}_{\text{R}}^{\text{2}} {\text{· cos(φ - ϑ) aw + (b² v}}_{\text{R}}^{\text{4}} {\text{- v}}_{\text{R}}^{\text{2}} \text{) = 0}$

The formula (1.12) can be solved for w.${\text{w = -v}}_{\text{R}}^{\text{2}} \text{cos(φ - ϑ) +} \sqrt{{\text{v}}_{\text{R}}^{\text{4}} {\text{cos² (φ - ϑ)² - v}}_{\text{R}}^{\text{4}} {\text{+ v}}_{\text{R}}^{\text{2}}} {\text{= -v}}_{\text{R}}^{\text{2}} \text{cos(φ - ϑ) +} \sqrt{{\text{v}}_{\text{R}}^{\text{2}} {\text{- v}}_{\text{R}}^{\text{4}} \text{sin² (φ - ϑ)}} {\text{= -v}}_{\text{R}}^{\text{2}} {\text{cos(φ - ϑ) + v}}_{\text{R}}^{\text{2}} \sqrt{\frac{\text{1}}{{\text{v}}_{\text{R}}^{\text{2}}} \text{- sin² (φ - ϑ)}}$

Moreover, the formula (1.14) can also be solved for w.${\text{w′ = -v}}_{\text{R}}^{\text{2}} \text{cos(φ - ϑ) a +} \sqrt{{\text{v}}_{\text{R}}^{\text{4}} {\text{a² cos² (φ - ϑ) - (b² v}}_{\text{R}}^{\text{4}} {\text{- v}}_{\text{R}}^{\text{2}} \text{)}} {\text{= -v}}_{\text{R}}^{\text{2}} {\text{a cos(φ - ϑ) + v}}_{\text{R}}^{\text{2}} \sqrt{\text{a² cos² (φ - ϑ) - b² +} \frac{\text{1}}{{\text{v}}_{\text{R}}^{\text{2}}}} {\text{= -v}}_{\text{R}}^{\text{2}} {\text{a cos (φ - ϑ) + v}}_{\text{R}}^{\text{2}} \sqrt{\frac{\text{1}}{{\text{v}}_{\text{R}}^{\text{2}}} \text{+ a² cos² (φ - ϑ) - b₂}} {\text{= -v}}_{\text{R}}^{\text{2}} {\text{a cos (φ - ϑ) + v}}_{\text{R}}^{\text{2}} \sqrt{\frac{\text{1}}{{\text{v}}_{\text{R}}^{\text{2}}} \text{+ (b² - a²) - a²sin² (φ - ϑ)}}$

Next, the sign of the second item in the radical sign of the second item in the formula (1.16) is checked.${\text{b² - a² = 1 - 2ZY}}_{\text{c}} {\text{sin φ + Z²Y}}_{\text{c}}^{\text{2}} \text{- (1 -} \frac{\text{cos ϑ}}{\text{cos(φ - ϑ)}} {\text{· ZY}}_{\text{c}} \text{)²} {\text{= 2ZY}}_{\text{c}} \text{(} \frac{\text{cos ϑ}}{\text{cos(φ - ϑ)}} \text{- sin φ) +} \frac{\text{cos² ϑ}}{\text{cos² (φ - ϑ)}} {\text{Z² Y}}_{\text{c}}^{\text{2}} {\text{= 2ZY}}_{\text{c}} \frac{\text{{cos ϑ - sin φ (cos φ cos ϑ + sin φ sin ϑ)}}}{\text{cos(φ - ϑ)}} \text{+} \frac{\text{cos² ϑ}}{\text{cos² (φ - ϑ)}} {\text{Z² Y}}_{\text{c}}^{\text{2}}$$\text{First item =} \frac{\text{cos ϑ (1 - cosφ sinφ) + sin ϑ sin² φ}}{\text{cos (φ - ϑ)}} \text{> 0}$$\text{Second item =} \frac{\text{cos² ϑ}}{\text{cos²(φ - ϑ)}} {\text{Z² Y}}_{\text{c}}^{\text{2}} \text{> 0}$

From the formula (1.16),$\text{∴ b² - a² > 0 ∴ b > a}$

Comparison between the value in the radical sign of the second items of the formulae (1.14) and (1.15) results in the following relationship.$\text{Δ₂ =} \frac{\text{1}}{{\text{v}}_{\text{R}}^{\text{2}}} \text{- sin²} \overline{\text{(φ - ϑ)}} \text{- {} \frac{\text{1}}{{\text{v}}_{\text{R}}^{\text{2}}} \text{+ (b² - a²) - a² sin²} \overline{\text{(φ - ϑ)}} \text{}} \text{=-sin² (φ - ϑ) - (b² - a²) + a² sin² (φ - ϑ)} \text{=- (b² - a²) - (1 - a²) sin² (φ - ϑ) < 0}$

In the same way, comparison between the first items results in the following relationship.${\text{Δ₁ = -v}}_{\text{R}}^{\text{2}} {\text{cos(φ - ϑ) - {-v}}_{\text{R}}^{\text{2}} \text{a cos(φ - ϑ)}} {\text{= v}}_{\text{R}}^{\text{2}} \text{cos(φ - ϑ) · (a - 1) < 0}$
clearly from the above$\text{Δ₁ + Δ₂ < 0}$

Therefore$\text{w - w′ = Δ₁ + Δ₂ < 0 ∴ w < w′}$${\text{w = -v}}_{\text{R}}^{\text{2}} {\text{cos(φ - ϑ) + v}}_{\text{R}}^{\text{2}} \sqrt{\frac{\text{1}}{{\text{v}}_{\text{R}}^{\text{2}}} \text{- sin² (φ - ϑ}} \text{)} {\text{< -v}}_{\text{R}}^{\text{2}} {\text{a cos(φ - ϑ) + v}}_{\text{R}}^{\text{2}} \sqrt{\frac{\text{1}}{{\text{v}}_{\text{R}}^{\text{2}}} \text{- a² sin² (φ - ϑ) + (b² - a²)}} \text{= w′ (power flow value when the shunt capacitor is inserted)}$

On the contrary, a pair of values of v_{R} can be obtained for w by solving the formula (1.11) for v_{R}. In the case of inserting the shunt capacitor, the maximum power flow value wₘ can be proved in the following relationship by the calculation conducted below.${\text{w′}}_{\text{m}} \text{=} \frac{\text{1 + 2} \sqrt{{\text{1 - 2ZY}}_{\text{c}} {\text{sin φ + Z² Y}}_{\text{c}}^{\text{2}}}}{{\text{2 {cos(φ - ϑ) - ZY}}_{\text{c}} \text{cos ϑ}}} \text{=} \frac{\text{1 + 2b}}{{\text{2 {1 + cos(φ - ϑ) - (1 + ZY}}_{\text{c}} \text{cos ϑ)}}} \text{=} \frac{\text{1}}{\text{2}} \text{·} \frac{\text{1 + 2b}}{\text{1 + cos(φ - ϑ) - (1 - a) cos(φ - ϑ)}} \text{=} \frac{\text{1}}{\text{2}} \text{·} \frac{\text{1}}{\text{1 + cos(φ - ϑ)}} \text{·} \frac{\text{1 + 2b}}{\text{{1 -} \frac{\text{(1 - a) cos (φ - ϑ)}}{\text{1 + cos (φ - ϑ)}} \text{}}} {\text{= w}}_{\text{m}} \text{·} \frac{\text{1 + 2b}}{\text{1 -} \frac{\text{(1 - a) cos(φ - ϑ)}}{\text{1 + cos(φ - ϑ)}}} \text{a < 1} {\text{> w}}_{\text{m}}$
Inversely, the stability limit of power flow can be improved remarkably for the case where it is not inserted. By the way, the value of the stability limit improvement can also be foreseen because the values of Z, Y_{c}, S, W, φ, ϑ can be known.

Meanwhile, using the time reference adequately controlled, such stability limit can also be obtained from P, Q, V_{R} obtained by measuring$\frac{\text{Δp}}{\text{Δt}} \text{,} \frac{\text{Δq}}{\text{Δt}} \text{,} \frac{{\text{Δv}}_{\text{R}}}{\text{Δt}}$
and the value S calculated.

Direction and magnitude of change for F, Q, V_{R} can be known by supervising such values from time to time.

Namely, it can be determined whether values of p, q, v are changing suddenly or gradually and in the safe or risky direction by checking relationship of$\text{(p -} \frac{\text{Δp}}{\text{Δt}} \text{) (q -} \frac{\text{Δq}}{\text{Δt}} {\text{) (v}}_{\text{R}} \text{-} \frac{{\text{Δv}}_{\text{R}}}{\text{Δt}} \text{).}$

A system configuration indicating the embodiment of the present invention will then be explained.

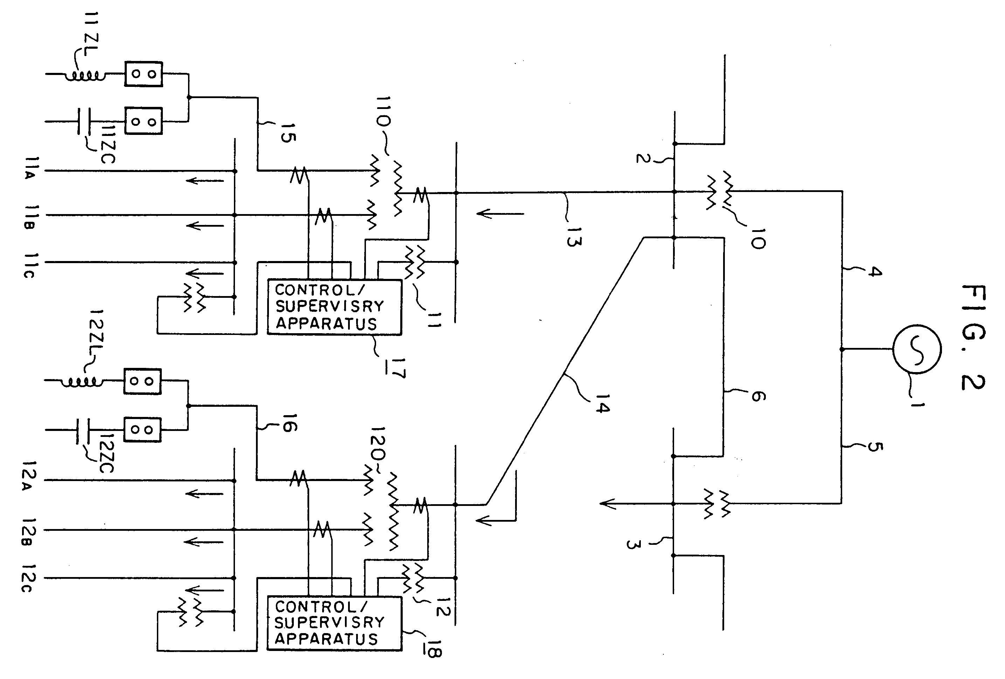

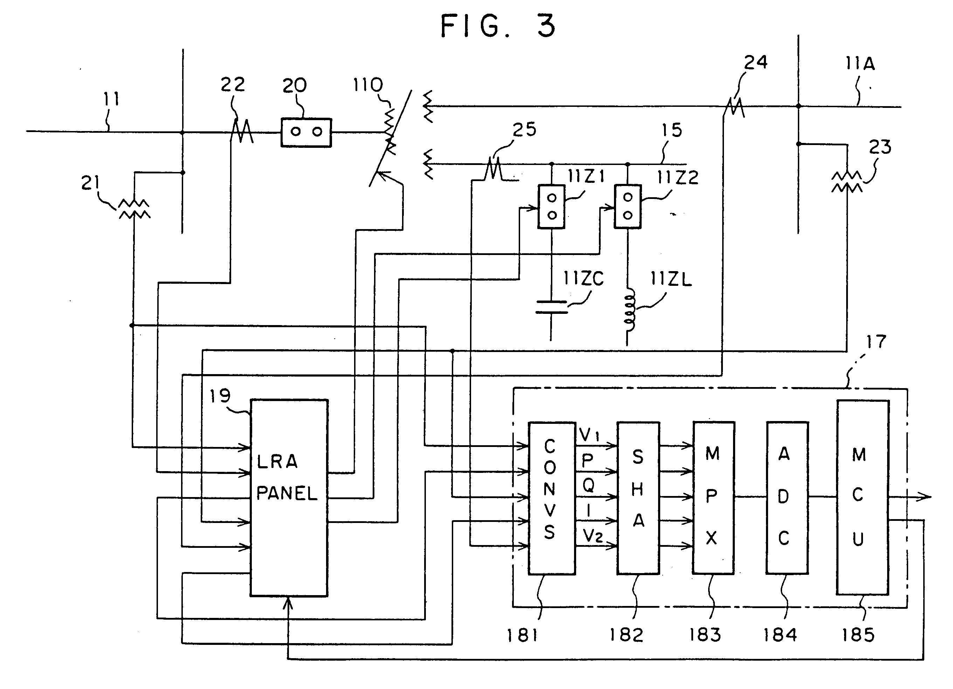

In Fig. 2, 2 and 3 designate the primary substations being connected to the power source 1 through the transmission lines 4, 5. The primary substations 2 and 3 are linked with the line 6.

11, 12 ... are the secondary substations located near the load areas from the primary substations. The primary substation 2 and secondary substation 11 are linked with the line 13 and the primary substation 2 and secondary substation 12, with the line 14.

The load feeders 11A, 11B, 11C, ... are connected to the low voltage side of bank 110 of the secondary substation. Moreover, it is also assumed that the tertiary side of bank 110 has VAR supply equipment on bus 15.

With such system configuration, the power flows from 1 to load through the transmission line 4, banks 10, 110 and feeders 11A, 11B, 11C. Also from the bank 120 which is in parallel with the bank 110 of the secondary substation 11, the power flows to a load through the feeders 12A, 12B, 12C.

In such a power system, the control and monitoring device 17, 18 are respectively provided to the banks 110, 120 of the secondary substations 11, 12 on one to one. Since the feeders 11A, 11B, 11C, 12A, 12B, 12C viewed from the banks 110, 120 are all in the load area, the direction of the power flow is uniform.

That is, the power system seen upper from the control and monitoring device 17, 18 location can be regarded as the power source 1, and the feeders 11A, 11B, 12A, 12B, 12C as the load.

Besides the reverse power flow does not occur.

In such a system configuration and layout of apparatuses and devices, the balance between the load and power source, and the variation of load are measured, detected and monitored around the banks 110, 120 and the VAR supply equipments 11Z (shunt reactor 11ZL, shunt capacitor 11ZC) are adjusted and controlled as required. The system as an object of the present invention has the configuration and layout described above and the power flow of that system flows in uniform direction.

Namely, the bus of load voltage V_{R} described in the explanation about the principle corresponds to a high voltage bus of the secondary substations 11, 12, the banks 110, 120 and others to a load side and a part of the phase modifying equipments 11ZL, 11ZC, 12ZL, 12ZC connected to the buses 15, 16 of the phase modifying equipment to a shunt capacitor (SC).

A practical example of the control and monitoring devices connected to the system will be explained.

In Fig. 3, the same elements as that in Fig. 2 are given the like numerals and the same explanation will not be repeated.

In that figure, 20 designates a primary circuit breaker of the bank 110; 21, potential transformer for high voltage bus; 22, current transformer for primary current of bank 110; 23, transformer for measuring voltage of intermediate voltage bus; 24, current transformer for secondary current of the bank 110. Outputs of these PTs and CTs are input to the on-load tap changing control panel 19 and the control and supervisory devices 17. 25 designates current transformer for tertiary current of the bank 110 and the output thereof is also input to the control and supervisory apparatus 17. 19 is existing on-load tap changer control panel (hereinafter referred to as LRA panel) having the voltage-reactive power regulating function. The control and supervisory devices 17 is provided for controlling such LRA panel 19.

Next, the control and supervisory devices 17 will be explained hereunder in detail.

181 denotes converter circuit which receives four signals being input to the LRA panel 19 and the signal sent directly from the transformer for measuring tertiary current of the bank 110. With these inputs, the effective power P, reactive power Q, primary voltage V_{R} of bank, secondary voltage of bank, tertiary capacitance Q_{c} of bank of the bank 110 as a whole are measured.

182 denotes sample and hold amplifier which holds analog value of output voltage of converting circuit 181.

183 denotes multiplexer which receives the five kinds of quantities of whole effective power P, reactive power Q, primary voltage V_{R} of bank, secondary voltage of bank and tertiary capacitance of bank of the bank 110 from the output side of sample hold amplifier 182 and switches them over by the control command from the microcontroller 185.

184 denotes A/D converter connected to the multiplexer 183 for converting an input analog voltage into a digital value.

185 designates microcontroller connected to the A/D converter 184. This microcontroller sequentially receives inputs of such analog measured value for the functional operation to be described hereafter, operating the circuit breakers 11Z1, 11Z2 through the LRA apparatus 19 with the result of such functional operation and also transmitting the result to the electrical stations for operating and controlling the primary side of the secondary substation.

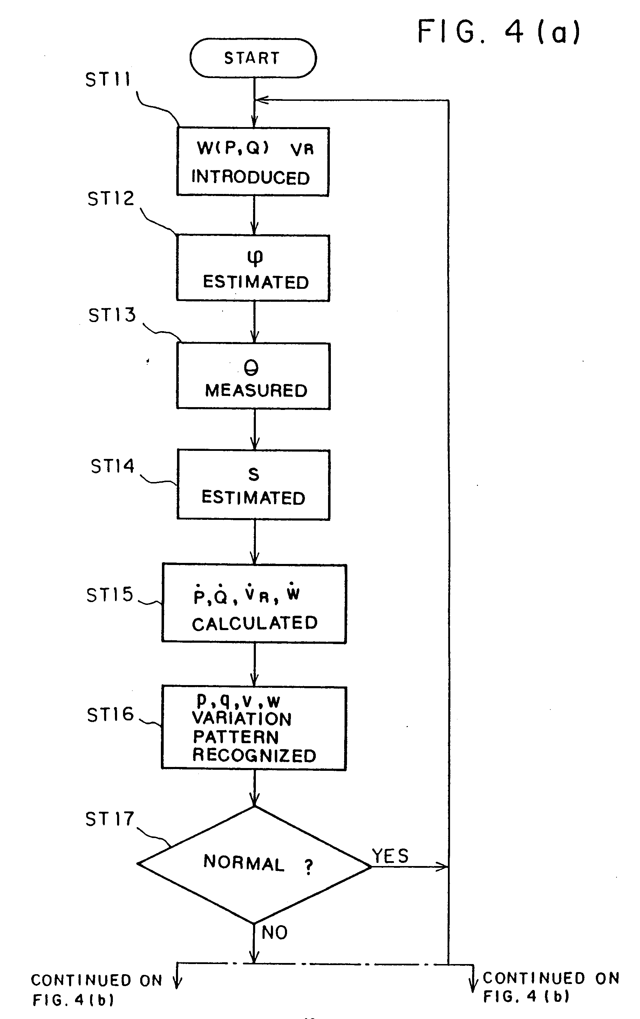

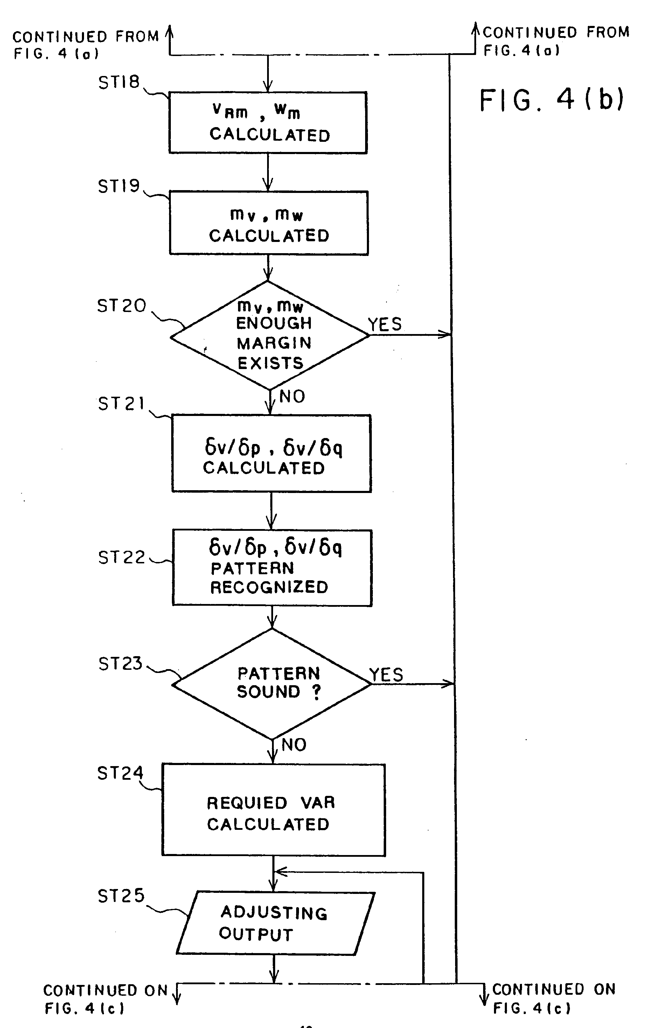

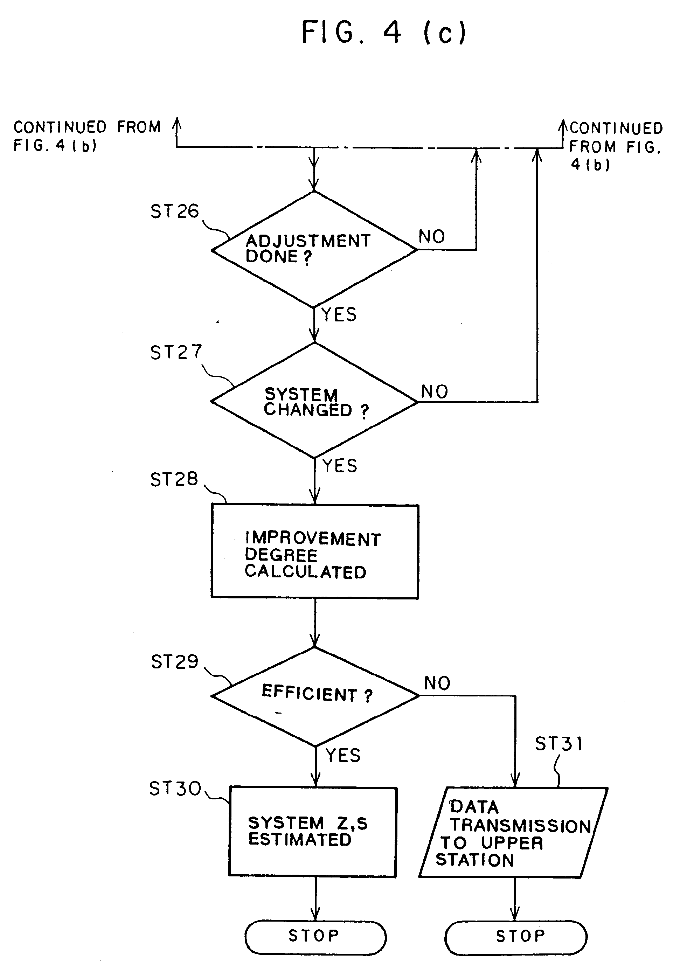

Next, operations of the control and supervisory devices 17 will then be explained using a flowchart of Fig. 4.

First, a load voltage V_{R} at the principal point in the system connecting the apparatus of the present invention and a power flow W (= P + jQ) flowing into the load passing through such point are read in the step ST11.

Each rate of change of effective power P and reactive power Q is calculated from power flow (P,Q), load voltage V_{R} and previously measured value of them and a phase angle φ of system impedance is estimated in the step ST12 in accordance with the formula (1.2). Within a very short period, the phase angle φ may be assumed as constant. Next, the phase angle ϑ of the load is measured in the step ST13. After obtaining the value of X/R, the normalized power flow w is calculated by the formula (1.3) using the phase angle φ of power source and the phase angle ϑ of load. Next, the short-circuit capacity S of the system is obtained in the step ST14 by dividing a value of power flow W with the normalized power flow w.

Here, since the values of V_{R}, P, Q, W, S, φ, ϑ are already known, following values can be obtained for the adequate time interval Δt in the step ST15 from such values.${\text{p}}^{̇} \text{=} \frac{\text{Δp}}{\text{Δt}} {\text{q}}^{̇} \text{=} \frac{\text{Δq}}{\text{Δt}}$${\text{w}}^{̇} \text{=} \frac{\text{Δw}}{\text{Δt}}$${{\text{v}}^{̇}}_{\text{R}} \text{=} \frac{{\text{Δv}}_{\text{R}}}{\text{Δt}}$

From the values of ṗ, q̇, ẇ, v̇_{R} and the current values of p, q, w, v_{R}, the variation and the rate of the change (magnitude and direction) of the power flow and voltage normalized in current can be sensed in the step ST16.

When the power flow and voltage values observed in these case are near the reference limit value having been set by separate calculation on the off line basis, or in case the power flow and voltage are yet far from the reference limit value but these rates of the change are large, sequential operation is shifted to the next step (step ST17) regarding such values to be within the area of the pattern of system dynamic change.

Namely, the stability limit values of the system with constant power loads such as v_{Rm}, wₘ of the formulae (1.5), (1.6) are obtained in the step ST18 using the values of φ, ϑ (S, P, W, V_{R}) obtained from the assumption method described above.

Using these values, margin of power flow limit (formula 1.7) in the case where whole loads can be considered as the constant power load is obtained in the step ST19.${\text{m}}_{\text{w}} \text{= 2} \frac{\text{W}}{\text{S}} \text{{1 + cos(φ - ϑ)}}$

A voltage margin mᵥ for the voltage stability limit can be checked in the step ST20 using the formula (1.8).

This value is recognized to be proper if the difference between this and the stability limit calculated separately by the off-line calculation is not significant. Then the power system operation can be safely continued (steps ST21 - 23).

If this value is larger than a reference model value of the off-line calculation, sensitivity coefficient of the power flow-voltage is again calculated using the formulae (1.9) and (1.10).

This sensitivity coefficient becomes large with the increase of power flow, but it is also known that not only the sensitivity coefficient of q-v_{R} but also the sensitivity coefficient of p-v_{R} become large at the value near voltage stability limit as causing voltage to be fallen rapidly. Particularly when the values of ∂v_{R}/∂p, ∂v_{R}/∂q exceed 1, it indicates that the system operation is in the dangerous area. Therefore, it is decided whether such values have exceeded or not the set value obtained by dividing such value with an adequate margin. When the value is in the safe zone, operation is continued, and otherwise, the system change operation starts (step ST22, 23).

For the change of the system operation, switching of VAR supply equipment is required. The required amount of VAR to be supplied from the equipment is calculated from the equation (1.11) giving the system voltage V_{R} to be maintained for the present power flow.

When a calculated VAR value is within VAR supply equipment capacity which may be obtained at the adjusting point, the required minimum equipment capacity is applied or when such value is larger, the maximum equipment capacity which may be available at present is applied (step ST25, 26).

If the VAR supply equipment which may be operated is short in total, such information is transmitted to the electrical station which is capable of operating the systems of the wider range including such load system as the object of operation (step ST27), and, for example, possibility of similar voltage adjustment is decided for operation in the primary substation 2 shown in Fig. 2.

After a series of such operations proceeded and the VAR supply equipment is operated (or in some cases, that equipment is turned off), changes occur for the voltage-power flow of the system. Therefore, such changes are detected and measured in the step ST28. In the step ST29 the value before adjusting operation is compared with current value. Thereby, verifying the improved effect of system (voltage - power flow) operation.

In case such effect is considered sufficient, a value being change of system condition generated by such turning on is used for deciding (step ST30) the short-circuit impedance Z and short-circuit capacity S. At the same time, it is stored as values of the new system constants which is used for deciding the next sequential operation after this operation.

In addition, when improving effect of system operation is still insufficient, various values such as insufficient VAR supplying capacity and other system conditions are transmitted to the electrical stations of the higher voltage side, enabling the system operation viewed from the upper voltage side (step ST31).

## Claims

1. A voltage-reactive power control apparatus comprising: measuring means (21 to 25) installed at a principal point of the system for measuring the power flow (W=P+jQ) into the system and the load voltage (V_{R}) at the principal point;
power flow supervisory means (17, 18) for calculating the rates of change of active and reactive power (ΔP/Δt, ΔQ/Δt) with respect to the time by using the measured power flow (W) and the load voltage (V_{R}) and for supervising said rates of change (ΔP/Δt, ΔQ/Δt);
short circuit capacity calculating means (17, 18) for calculating the phase angle (φ) of the power source side impedance (Z) and the short circuit capacity (S) by using the values obtained by said measuring means (21 to 25) and said power flow supervisory means (17, 18) under the condition that the system is considered as a single load (Z_{L}, ϑ) being connected at the principal point according to the Thevenin equivalent of a network comprising of a single constant voltage (V_{S}) power source through a single power source side impedance (Z);
stability limit calculating means (17, 18) for calculating the maximal possible value of the power flow (Wₘ) and the value of the load voltage (V_{Rm}) at the principal point when the power flow reaches said maximal possible value (Wₘ) by using the values obtained by said short circuit capacity calculating means (17, 18) and for calculating a voltage stability limit margin of the power flow (m_{W}) defined as being the ratio of the present power flow (W) and said maximal possible value of the power flow (Wₘ) and a voltage stability limit margin of the load voltage (m_{V}) defined as being the ratio of the present load voltage (V_{R}) and the value of said load voltage (V_{Rm}) at the principal point when the power flow reaches said maximal possible value (Wₘ); and
VAR supply equipment adjusting means (17, 18) for controlling a VAR supply equipment (11ZL, 11ZC, 12ZL, 12ZC) when said voltage stability limit margin of the power flow (m_{W}) and said voltage stability limit margin of the load voltage (m_{V}) reach a predetermined value and when consecutively the rates of change of the load voltage with respect to the active and reactive power (δV_{R}/δP, δV_{R}/δQ) reach a predetermined value, the VAR supply equipment being controlled with a time delay corresponding to said rates of change of the load voltage with respect to the active and reactive power (δV_{R}/δP, δV_{R}/δQ).

2. A voltage-reactive power control apparatus according to claim 1, wherein said measuring means comprises a voltage measuring potential transformer (21) connected to a high voltage bus of bank (110) of substation, a primary current measuring current transformer (22), a second voltage measuring potential transformer (23) connected to the intermediate voltage bus of bank of substation, a secondary current measuring current tranformer (24), a tertiary current measuring current transformer (25), and a converter circuit (181) which receives an output of these tranformers (21 to 25) and, converts to active power (P), reactive power (Q) and load voltage (V_{R}).

3. A voltage-reactive power control apparatus according to claim 2, wherein said power flow supervisory means, short-circuit capacity supervisory means, stability limit calculating means and VAR supply modifying equipments capacity adjusting means (17,18) comprise a sample hold amplifier (182) for holding outputs of said converter circuit (181), a multiplexer (183) for selecting outputs of this sample hold amplifier (182), an A/D converter (184) for analog/digital conversion of outputs from multiplexer (183) and a microcontroller (185) for making calculation by inputting outputs of A/D converter (184).

4. A voltage-reactive power control apparatus according to claim 3, wherein said converter circuit (181), sample hold amplifier (182), multiplexer (183), A/D converter (184) and microcontroller (185) form a unit of control and supervisory apparatus (17).

5. A voltage-reactive power control apparatus according to claim 3 or 4, wherein VAR supply modifying equipment includes a shunt reactor (11ZL,12ZL) and a shunt capacitor (11ZC, 12ZC) or equivalent combination of the above two.

## Patentansprüche

1. Blindleistungssteuerungsgerät mit:
Meßeinrichtungen (21 bis 25), welche an einem Hauptpunkt des Systems zum Messen des Energieflusses (W = P + jQ) in das System und der Lastspannung (V_{R}) an dem Hauptpunkt installiert sind;
eine Energieflußüberwachungseinrichtung (17, 18) zum Berechnen der Änderungsgeschwindigkeit der Wirk- und der Blindleistung (ΔP/Δt, ΔQ/Δt), bezogen auf die Zeit, durch Verwenden des gemessenen Energieflusses (W) und der Lastspannung (V_{R}) und zum Überwachen der Änderungsgeschwindigkeiten (ΔP/Δt, ΔQ/Δt);
eine Kurzschlußkapazitätsberechnungseinrichtung (17, 18) zum Berechnen des Phasenwinkels (φ) der energiequellenseitigen Impedanz (Z) und der Kurzschlußkapazität (S) durch Verwenden der Werte, die durch die Meßeinrichtungen (21 bis 25) und die Energieflußüberwachungseinrichtung (17, 18) erhalten werden, unter der Bedingung, daß das System als eine einzelne Last (Z_{L}, ϑ) betrachtet wird, die an dem Hauptpunkt angeschlossen ist, entsprechend dem Helmholtz-Äquivalent eines Netzwerks mit einer einzelnen, konstanten Spannungsquelle (V_{S}) durch eine einzelne energiequellenseitige Impedanz (Z);
einer Stabilitätsgrenzenberechnungseinrichtung (17, 18) zum Berechnen des maximal möglichen Wertes des Energieflusses (Wₘ) und des Wertes der Lastspannung (V_{Rm}) an dem Hauptpunkt, wenn der Energiefluß den maximal möglichen Wert (Wₘ) erreicht, durch Verwenden der Werte, die durch die Kurzschlußkapazitätsberechnungseinrichtung (17, 18) erhalten wurden, und zum Berechnen einer Spannungsstabilitätsgrenze (m_{w}) des Energieflusses, welche als das Verhältnis des gegenwärtigen Energieflusses (W) und des maximal möglichen Wertes des Energieflusses (Wₘ) definiert ist, und einem Spannungsstabilitätsgrenzabstand der Lastspannung (mᵥ), welcher als Verhältnis der gegenwärtigen Lastspannung (V_{R}) und des Wertes der Lastspannung (V_{Rm}) an dem Hauptpunkt definiert ist, wenn der Energiefluß seinen maximal möglichen Wert (Wₘ) erreicht; und
einer VAR-Abgabeeinrichtungseinstelleinrichtung (17, 18) zum Steuern einer VAR-Abgabeeinrichtung (11ZL, 11ZC, 12ZL, 12ZC), wenn der Spannungsstabilitätsgrenzabstand des Energieflusses (m_{w}) und der Spannungsstabilitätsgrenzabstand der Lastspannung (mᵥ) einen vorbestimmten Wert erreichen, und wenn die Geschwindigkeitsänderungen der Lastspannung bezogen auf die Wirk- und Blindleistung (δV_{R}/δP, δV_{R}/δQ) aufeinanderfolgend einen vorbestimmten Wert erreichen, wobei die VAR-Abgabeeinrichtung mit einer Zeitverzögerung gesteuert wird, die den Geschwindigkeitsänderungen der Lastspannung, bezogen auf die Wirk- und die Blindleistung (δV_{R}/δP, δV_{R}/δQ), entspricht.

2. Blindleistungssteuerungsgerät nach Anspruch 1,
bei welchem die Meßeinrichtung einen Spannungsmeßpotentialtransformator (21), der an einen Hochspannungsbus einer Bank (110) einer Nebenstation angeschlossen ist, einen Primärstrommeßstromtransformator (22), einen zweiten Spannungsmeßpotentialtransformator (23), der an den Zwischenspannungsbus der Bank der Nebenstation angeschlossen ist, einen Sekundärstrommeßstromtransformator (24), einen Tertiärstrommeßstromtransformator (25) und eine Wandlerschaltung (181), welche ein Ausgangssignal dieser Transformatoren (21 bis 25) empfängt und in Wirkleistung (P), Blindleistung (Q) und Lastspannung (V_{R}) umwandelt, umfaßt.

3. Blindleistungssteuerungsgerät nach Anspruch 2,
bei welchem die Energieflußüberwachungseinrichtung, Kurschlußkapazitätsüberwachungseinrichtung, Stabilitätsgrenzberechnungseinrichtung und VAR-Abgabemodifizierungseinrichtungskapazitätseinstelleinrichtung (17, 18) einen Abtast-Halte-Verstärker (182) zum Halten der Ausgangssignale der Wandlerschaltung (181), einen Multiplexer (183) zum Selektieren der Ausgangssignale dieses Abtast-Halte-Verstärkers (182), einen A/D-Wandler (184) zur Analog/Digital-Wandlung der Ausgangssignale des Multiplexers (183) und einen Mikrokontroller (185) zum Ausführen der Berechnung durch Eingeben der Ausgangssignale des A/D-Wandlers (184) aufweist.

4. Blindleistungssteuerungsgerät nach Anspruch 3,
bei welchem die Wandlerschaltung (181), der Abtast-Halte-Verstärker (182), der Multiplexer (183), der A/D-Wandler (184) und der Mikrokontroller (185) eine Einheit eines Steuerungs- und Überwachungsgerätes (17) bilden.

5. Blindleistungssteuerungsgerät nach Anspruch 3 oder 4,
bei welchem die VAR-Abgabemodifizierungseinrichtung eine Nebenschlußdrossel (11ZL, 12ZL) und einen Nebenschlußkondensator (11ZC, 12ZC) oder eine gleichartige Kombination der beiden genannten Komponenten beinhaltet.

## Revendications

1. Appareil de réglage d'une puissance réactive en tension, comprenant:
des moyens de mesure (21 à 25) installés en un point principal du système, pour mesurer le flux d'énergie (W=P+jQ) admis dans le système et la tension (V_{R}) de la charge au point principal;
des moyens de surveillance de flux d'énergie (17, 18) destinés à calculer les taux de variation dans le temps de la puissance active et réactive (ΔP/Δt, ΔQ/Δt), en utilisant le flux d'énergie mesuré (W) et la tension (V_{R}) de la charge, et à surveiller lesdits taux de variation (ΔP/Δt, ΔQ/Δt);
des moyens de calcul de capacité en court-circuit (17, 18) destinés à calculer l'angle de phase (Φ) de l'impédance côté source d'énergie (Z) et de la capacité en court-circuit (S), en utilisant les valeurs obtenues par lesdits moyens de mesure (21 à 25) et lesdits moyens de surveillance de flux d'énergie (17, 18), sous la condition que le système est considéré comme une charge unique (Z_{L}, ϑ) connectée au point principal, conformément à l'équivalent de Thévenin d'un réseau consistant en une source d'énergie à tension constante unique (V_{S}), au travers d'une impédance unique côté source d'énergie (Z);
des moyens de calcul de limite de stabilité (17, 18) destinés à calculer la valeur maximum possible du flux d'énergie (Wₘ) et la valeur de la tension (V_{Rm}) de la charge, au point principal, quand le flux d'énergie atteint ladite valeur maximum possible (Wₘ), en utilisant les valeurs obtenues par lesdits moyens de calcul de capacité en court-circuit (17, 18), et à calculer une marge de limite de stabilité en tension du flux d'énergie (m_{W}), définie comme étant le rapport du flux d'énergie instantané (W) et de ladite valeur maximum possible du flux d'énergie (Wₘ), et une marge de limite de stabilité en tension de la tension (m_{V}) de la charge, définie comme étant le rapport de la tension instantanée (V_{R}) de la charge et de la valeur de ladite tension (V_{Rm}) de la charge, au point principal, quand le flux d'énergie atteint ladite valeur maximum possible (Wₘ); et
des moyens d'ajustement (17, 18) d'un équipement d'alimentation en VAR, destinés à commander un équipement d'alimentation en VAR (11ZL, 11ZC, 12ZL, 12ZC), quand ladite marge de limite de stabilité en tension du flux d'énergie (m_{W}) et ladite marge de limite de stabilité en tension de la tension (m_{V}) de la charge atteignent une valeur prédéterminée et quand, consécutivement, les taux de variation de la tension de la charge par rapport à la puissance active et réactive (δV_{R}/δP, δV_{R}/δQ) atteignent une valeur prédéterminée, l'équipement d'alimentation en VAR étant commandé avec un retard temporel correspondant auxdits taux de variation de la tension de la charge par rapport à la puissance active et réactive (δV_{R}/δP, δV_{R}/δQ).

2. Appareil de réglage d'une puissance réactive en tension selon la revendication 1, dans lequel lesdits moyens de mesure comprennent un transformateur de potentiel (21) mesurant une tension relié à un bus à haute tension d'un banc (110) de sous-station, un transformateur de courant (22) mesurant un courant primaire, un deuxième transformateur de potentiel (23) mesurant une tension relié au bus à tension intermédiaire du banc de sous-station, un transformateur de courant (24) mesurant un courant secondaire, un transformateur de courant (25) mesurant un courant tertiaire, et un circuit convertisseur (181) qui reçoit un signal de sortie de ces transformateurs (21 à 25) et réalise une conversion en une puissance active (P), une puissance réactive (Q) et une tension (Vr) de la charge.

3. Appareil de réglage d'une puissance réactive en tension selon la revendication 2, dans lequel lesdits moyens de surveillance de flux d'énergie, lesdits moyens de surveillance de capacité en court-circuit, lesdits moyens de calcul de limite de stabilité et lesdits moyens d'ajustement (17, 18) de la capacité d'équipements modifiant l'alimentation en VAR, comprennent un amplificateur d'échantillonnage (182) pour maintenir les signaux de sortie dudit circuit convertisseur (181), un multiplexeur (183) pour sélectionner des signaux de sortie de cet amplificateur d'échantillonnage (182), un convertisseur A/N (184) pour convertir d'analogique en numérique les signaux de sortie du multiplexeur (183) et un micro-régulateur (185) destiné à effectuer les calculs en recevant les signaux de sortie du convertisseur A/N (184).

4. Appareil de réglage d'une puissance réactive en tension selon la revendication 3, dans lequel ledit circuit convertisseur (181), ledit amplificateur d'échantillonnage (182), ledit multiplexeur (183), ledit convertisseur A/N (184) et ledit micro-régulateur (185), constituent une unité formant un appareil de commande et de surveillance (17).

5. Appareil de réglage d'une puissance réactive en tension selon la revendication 3 ou 4, dans lequel l'équipement modifiant l'alimentation en VAR comprend une inductance de shuntage (11ZL, 12ZL) et un condensateur de shuntage (11ZC, 12ZC) ou une combinaison équivalente de ces deux composants.
